# EUROPEAN PATENT SPECIFICATION

(11) **EP 2 714 746 B1**
(45) Date of publication and mention of the grant of the patent: **24.06.2015**
(21) Application number: 12725652.7
(22) Date of filing: 17.05.2012
(51) Int. Cl.: C08B 37/00, C04B 28/02, C09D 105/00, C04B 28/14, C04B 24/38

(54) **HYDROXYPROPYL GUAR**
HYDROXYPROPYL-GUAR
HYDROXYPROPYL GUAR

(30) Priority: 25.05.2011 IT VA20110014
(43) Date of publication of application: 09.04.2014
(73) Proprietor: Lamberti SpA, 21041 Albizzate (VA) (IT)
(72) Inventor: LANGELLA, Valentina, I-20155 Milano (MI) (IT); PELIZZARI, Raffaella, I-20013 Magenta (MI) (IT); PFEIFFER, Ugo, I-20149 Milano (IT); FLORIDI, Giovanni, I-28100 Novara (IT); LI BASSI, Giuseppe, I-21026 Gavirate (VA) (IT)
(74) Representative: Giaroni, Paola
(86) International application number: PCT/EP2012/059215
(87) International publication number: WO 2012/159972

(56) References cited:
- EP-A1- 1 264 808
- US-A- 5 104 436

## Description

### Technical Field

The invention relates to a process for the preparation of hydroxypropyl guar with high molar substitution and with a specific substitution pattern, and to the hydroxypropyl guar obtained with said process.

The hydroxypropyl guar of the invention is particularly stable to hydrolysis in water, even in alkaline medium or in the presence of a degrading enzyme or at high temperature.

The well known water retention and rheology properties of highly substituted hydroxypropyl guar are maintained and the stable hydroxypropyl guar of the disclosure may be used as additive in building compositions and in water based paints and varnishes, where hydrolytic and biodegrading conditions are often encountered.

### Prior art

"Guar gum" or simply "Guar" is a galactomannan obtained by the thermo-mechanical treatment of the seeds of "Cyamopsis Tetragonolobus", a leguminosae cultivated in the semi-dry region of tropical countries, particularly in India and in Pakistan.

It is usually found in the form of "splits", that are the endosperms of the seed deprived of the husk and from the inner proteic part, the germ, or in the form of powder (flour) of different particle-size, which is obtained from the splits by milling.

The guar gum galactomannan consists of a main linear chain of polymannose bearing branches of galactose units in a molar ratio of about 2:1 respectively.

Each ring of the monosaccharide bears three free hydroxyl groups that are available for chemical reaction, two of them being in the "cis" position.

The main structure of guar is the following:

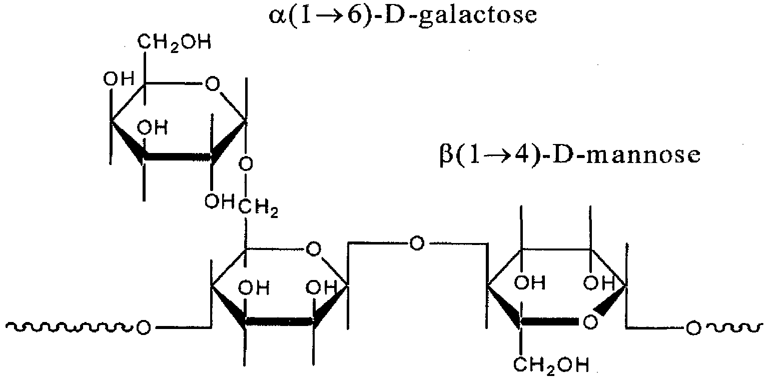

Hydroxyalkyl derivatives of guar are obtained by chemical reaction of the hydroxyl groups of the galactomannan chain with alkylene oxides (ethylene, propylene, butylene or higher oxides), in the presence of an alkaline catalyst (such as sodium hydroxide). The derivatization reaction may be conducted in the substantial absence of water or solvent (no water added) although the efficiency of the reaction is very low without the addition of water. Accordingly, the reaction is generally conducted in the presence of water to provide higher reactivity.

In the known processes for the production of hydroxypropyl guar, such reaction is carried out in a water-solvent media wherein the solvent is typically an alcohol, as described, for example, in US 3,326,890, US 3,723,409 etc.

Usually the amount of water used is from 20 to 50% by weight on the weight of guar. In order to decrease the environmental impact of these processes and their cost, some publications describe derivatization processes with a higher amount of water and, at the same time, a lower content of solvent.

US 3,912,713 provides a method of producing non-lumping derivatives of guar gum, which comprises derivatizing guar gum in the form of guar gum splits at a moisture content of up to 80% by weight.

US 5,104,436 provides a method of reacting guar gum with propylene oxide in water in which no alcohol or other solvent is required. Through the steps of the method, the natural guar gum achieves a molar substitution of the hydroxyl groups between 0.3 and 0.6.

US 4,959,464 describes a process in which derivatives of polygalactomannans are prepared by reacting the gum endosperm of the polygalactomannan with a derivatizing agent under aqueous alkaline conditions.

In US 4,028,127 the derivatization reaction may be carried out in the presence of from about 10 to 80 percent water based on the weight of guar gum, in combination with a solvent, such as isopropanol.

When higher amounts of water are used for the preparation of HPG with high molar substitution, the procedure generally requires, before the derivatization step or before the neutralization step, the addition of a crosslinker, which avoids the deleterious agglomeration of the reaction mass.

Now we have found that it is possible to obtain hydroxypropyl guar with molar substitution higher than 1.5 in the presence of an amount of water comprised between 90 and 200 parts by weight (pbw) each 100 pbw of guar, without the addition of any crosslinker, by introducing a distillation step at the end the derivatization step.

Surprisingly it has also been found that, in this process of etherification of guar with propylene oxide that results in highly substituted hydroxypropyl guar, i.e. in hydroxypropyl guar having molar substitution higher than 1.5, the amount of water influences the substitution pattern of the hydroxypropyl guar, higher amount of water favoring the substitution on galactose, that is on the sugars that are laterally attached to the main chain of the polysaccharide. The HPG obtained with said process are characterized by a ratio between unsubstituted mannose and galactose higher than 5, while using the process known in the art this ratio is below 5.

The hydroxypropyl guars obtained by the process of the disclosure show a superior stability in water solution, even in the presence of a degrading enzyme or an alkali, or upon storage at high temperature. They are therefore particularly suitable for many applications, and especially in alkaline building compositions, such as tile adhesives, mortars, cement plaster, self-levelling flooring, where hydroxypropyl guar is already used as rheology modifier and water retention agent.

In the present text, with the expression "molar substitution" (MS), we mean the number of hydroxypropyl substituents on each anhydroglycosidic unit of the guar which can be measured, for example, by ¹H-NMR.

The term "guar splits" means the guar gum endosperm which is obtained by removal of the hull and the germ from the guar seeds.

### Description of the Invention

It is therefore an object of the present invention a hydroxypropyl guar having molar substitution between 1.5 and 2.3 characterized in that it has an unsubstituted mannose/galactose ratio higher than 5.

A further object of the invention is a process for producing the above described hydroxypropyl guar comprising, in sequence: a) a derivatization step of guar with propylene oxide in the presence of a alkaline catalyst and in the presence of from 90 to 200 parts by weight of water per 100 parts by weight of guar; b) a step in which part of the water is distilled off until the residual amount of water is from 40 to 60 part per 100 parts by weight of guar; c) an acidification or neutralization step of the reaction mass.

The invention also relates to building compositions containing a hydraulic binder and to paints and varnishes comprising a hydroxypropyl guar having molar substitution between 1.5 and 2.3 and characterized in that it has an unsubstituted mannose/galactose ratio higher than 5.

### Detailed Description of the Invention

The unsubstituted mannose/galactose ratio may be determined by acid hydrolysis and ion chromatography with amperometric detector.

According to a preferred embodiment of the present invention, the hydroxypropyl guar has molar substitution comprised between 1.7 and 2.1.

In a particularly preferred embodiment the HPG of the invention exhibits a RVT Brookfield ® viscosity not higher than 20.000 mPa_{*}s at 20°C, 20 rpm and 2% by weight in water.

The derivatization step of the process described herein is applicable to guar in the form of flour or in the form of "splits".

The guar splits as used in this invention are commonly referred to as "purified splits", or "double purified splits" or "triple purified splits" depending upon the degree of purification. Purified splits are obtained by mechanical separation of the endosperm from the hull and germ of the guar seed in as pure and intact form as possible with no other processing steps. These purified splits contain, as impurities, from about 6 to 12 percent moisture, from 2 to 7 percent proteins and from 2 to 7 percent acid insoluble residue. They usually have a particle size range of from about 4 to about 20 mesh (U.S. Standard Sieve Series).

The polysaccharide in the guar splits may have undergone some degradation as result of the pretreatment used for the removal of the hulls, i.e., a dry heat treatment or a treatment with acid, alkali or oxidizing agents.

Guar flour can also be used in the process of the present invention. The guar flour suitable for obtaining the hydroxypropyl guar of the invention has, preferably, a molecular weight of between 100,000 and 2,500,000 Dalton and a RVT Brookfield viscosity at 25°C, 20 rpm and 1% in water comprised between 10 and 12,000 mPa_{*}s.

For the derivatization, the guar splits or guar flour can be swelled or suspended in water or in a water/water soluble solvent mixture using from 90 to 200 parts of water per 100 parts of guar in the presence of a catalytic amount of alkaline agent.

The water soluble solvents shall not react at all, or to a very slight degree, with propylene oxide. Suitable solvents are secondary lower alkanols, such as isopropanol, sec-butanol, sec-amyl alcohol, or tertiary lower alkanols, such as ter-butanol; also suitable are other water soluble solvent such as ethanol, acetone, dioxane or dimethylformamide. It is also possible to use mixture of solvents. Usually the weight ratio between water and solvent in the mixture is in the range 0.9:1 to 2:1. The alkaline catalysts are in general alkali metal or alkaline earth metal hydroxides, such as sodium, potassium or calcium hydroxide. Ammonia may also be used, as well as more complex basic catalysts, such as benzyl trimethyl ammonium hydroxide. Sodium hydroxide is the preferred alkaline catalyst.

Very small amounts of catalyst may be employed. It is usually not necessary to exceed 10 percent by weight of the guar, although larger amounts might be used. In general, from about 2 to about 5 % by weight of catalyst on the guar is employed.

The amount of propylene oxide utilized will vary with the desired molar substitution degree of the reaction product, that is higher than 1.5. For the preparation of the HPG of the invention a weight ratio from 0,6:1 to 1,2:1 of propylene oxide and guar is preferred.

The reaction can be conducted at room temperature or at elevated temperatures for a time sufficient to complete the reaction, usually in from about 0.5 to about 24 hours. The temperature range in which the reaction is generally conducted is from about 10 °C to about 100 °C. While higher temperatures can be used, such as up to 125 °C, there is generally no advantage achieved. The reaction is conducted under gentle mixing so as to continually expose the surfaces of the guar particles to the derivatizing agent and to keep a uniform temperature throughout the reactor, without exerting shearing forces on the particles so as to grind or smear them.

The reaction can be conducted at atmospheric temperature, under reflux, or at elevated pressures in a closed reactor. The exact pressure is not critical and while higher pressure may be employed, operation is normally conducted at whatever pressure develops during the reaction. Generally such pressures will be on the order of from 1 to 10 bar.

At the end of the derivatization step part of the water is removed by bringing the reaction mass in contact with gaseous nitrogen and distilling under reduced pressure. In the method of the invention, the reduced pressure conditions correspond to from 0.001 to 0.6 bar, heating conditions correspond to from 60 to 120 °C, and distillation time may be in the range of 30 min to some hours.

Thereafter, the pH of the resulting alkaline material can be reduced to a neutral or slightly acid value. Any acid may be selected to neutralize the reaction mixture, including strong acids such as hydrochloric acid and sulfuric acid or weak acids such as acetic acid. In a preferred embodiment either sulfuric or acetic acid is used. The amount of acid used is the amount which is necessary to reach the desired pH range. The commercially available HPG roughly belong to two categories: crude products, that is, products still containing by-products generated during their chemical preparation (glycols, polyglycols, inorganic/organic salts) and purified products. Purified hydroxypropyl guar possess a higher percentage of active substance than the crude product and obviously exhibits better thickening and rheological characteristics.

For this reason, after the neutralization, the HPG of the invention may be purified by washing with water, an organic solvent, or a mixture of both. Particularly preferred organic solvents are water soluble solvents including alcohols such as methanol, ethanol, isopropanol, n-propyl alcohol, n-butyl alcohol and the like. Other commonly used purification solvents such as acetone, glycols and the like may alternatively be selected. Of the above solvents, the most preferred is the use of ethanol, isopropyl alcohol, acetone and mixtures thereof.

At the end of the process the derivatized guar powders are then dried and recovered using means known in the art. Examples of such means include air drying, fluidized bed drying, filtering, evaporative drying, centrifuging, addition of solvents, freeze drying and the like. The use of fluidized bed drying is particularly recommended.

The hydroxypropyl guar of the invention can be used in the most different industrial applications, such as, merely by way of example, in the preparation of printing pastes, in the silkscreen printing of textiles (cotton, wool, silk, etc.); in formulations of water-based paints and varnishes; in the preparation of gypsum or cement based blends, adhesives for tiles; in the preparation of cleaning products, cosmetics or personal care products, such as shampoos, hair conditioners, skin creams; in the paper industry; in oil drilling; in the preparation of explosives; in the preparation of water-based solutions for fire fighting. As already mentioned, a relevant aspect of the present invention is that the hydroxypropyl guar of the invention exhibits in aqueous solutions an improved stability to thermal, alkali-oxidative and enzymatic degradation, in comparison with highly substituted hydroxypropyl guars of the prior art, that are characterized by a different substitution pattern. The capability of imparting and maintaining high viscosity to aqueous solution during the time, even under degrading conditions, constitutes the characteristic aspect of the hydroxypropyl guar of the invention that make them particularly suited to the use in formulations for the building industry.

One of the industrial fields wherein these properties are appreciated is the field of water-based paints and varnishes; paints and varnishes are usually formulated at pH higher than 8 .

Another very interesting field of use for the HPG of the invention is the field of building compositions based on hydraulic binders, such as cement and gypsum, in which the hydroxypropyl guar acts as water retention agent and rheology modifier, being capable to impart both adhesion and workability and viscosity, even if the pH is highly alkaline.

In addition, the characteristics of the HPG of the invention allow to reduce the amount of additive in the formulations and to improve the reproducibility of such formulations together with their storage limits.

In the present text with the term "hydraulic binders" we designate mineral substances that in the presence of water harden because of hydration chemical reactions and can bind other materials together. Hydraulic binder compositions that mainly consist of cement mixed with a variable amount of sand and possibly gypsum are generally used to prepare tile adhesives, mortars, concrete, cement plaster, finiture plaster, self-levelling flooring; hydraulic binder compositions based on gypsum are generally used to prepare gypsum plasters and joint compounds.

The dry compositions of the present invention generally contain from 5 to 80 % by weight of cement and/or gypsum as the hydraulic binder; preferably, in case the hydraulic binder is gypsum, the amount of hydraulic binder is from 40 to 80% by weight, while in case the hydraulic binder is cement, its amount ranges from 5 to 60% by weight.

The cement may be Portland cement or a Portland cement admixture or a non-Portland hydraulic cement, such as calcium aluminate cement, calcium sulfoaluminate cement, pozzolan-lime cement.

Preferred cements are Portland cement and Portland cements admixtures (by way of example, slag Portland cement, pozzolan Portland cement, fly ash Portland cement, blastfurnace Portland cement and all the Portland cement admixtures defined in standard EN 197-1 A3).

The gypsum may be calcium sulphate hemihydrate or anhydrite, most preferably is calcium sulphate hemihydrate.

Cement based dry hydraulic binder compositions may also be reinforced with fibres for the manufacture of fibrocements used, for example, as a material for making articles for covering roofs, pipework or tanks.

Dry compositions based on gypsum are used to prepare gypsum plasters, joint compounds, gypsum mortars and grouts.

Typical additional ingredients of cement based dry hydraulic binder compositions are fine and coarse aggregates (sand and/or gravel). Beside cement and/or gypsum, water retention agent and possibly aggregates, there are several other additives that can be added to the hydraulic binder composition of the invention before or during mixing with water.

Organic polymeric binders are typical additional ingredients of hydraulic binder compositions for tile adhesives, joints compounds and self-levelling floorings; calcium carbonate is usually present in gypsum and cement mortars and plasters, in joint compounds and self levelling flooring compositions.

Other chemical additives that may be present are usually classified according to their function; they act as air-entraining, water-reducing, retarding, accelerating, plasticizers and superplasticizers aids.

Other varieties of additives fall into the specialty category, whose functions include corrosion inhibition, shrinkage reduction, workability enhancement, bonding, damp proofing, and colouring.

In the Examples that follow the preparation of HPG according to the present invention and of HPG according to a procedure known in the art is reported.

In order to evaluate their stability in the presence of degradating compound, these HPG were then treated with enzyme or NaOH. Their performances in a cementitious composition are also described.

### EXAMPLES

### Preparation of Hydroxypropyl Guar

### Examples 1 - 9

800 g of guar flour or guar splits (see Table 1) were loaded in a 5 litres stirred reactor at room temperature, the reaction atmosphere was made inert by means of vacuum/nitrogen washings, and, under vigorous stirring, 100 g of a 30% NaOH solution and different amounts of water were added as reported in Table 1. The mixture was maintained under stirring for 15 minutes at 20 °C. The reactor was evacuated and refilled three times with nitrogen then different amounts of propylene oxide (see Table 1) were added. The reaction mixtures were maintained for 6 hours at 70-75°C under stirring. Then the solvent was partially distilled by applying vacuum to a pressure value between -0.9 and -0.5 bar referred to the atmosphere pressure. The distillation was stopped when the ratio by weight water/guar was 0.5. Afterwards the reaction system was cooled down to 40°C and its pH was brought down to a value comprised between 6.0 and 7.0 by addition of acetic acid. The mixture so obtained was, dried on a fluid bed drier using hot air and milled. At the end of the process all the hydroxypropyl guar of Example 1- 9 had a moisture content of about 3% by weight.

The MS and the Brookfield viscosity (2% wt in water, 20 rpm, 20 °C) of the hydroxypropyl guar of Example 1-9 are reported in Table 1.

**Table 1**

| | **Guar** | **Water** | **PO** | **water/ guar** | **MS** | **Visc. (mPa·s)** |
|---|---|---|---|---|---|---|
| **Example 1*** | Flour | 165 | 545 | 0.4 | 1.9 | 7600 |
| **Example 2** | Splits | 538 | 730 | 1.0 | 1.9 | 6400 |
| **Example 3** | Flour | 538 | 804 | 1.0 | 1.8 | 6800 |
| **Example 4** | Splits | 538 | 658 | 1.0 | 1.8 | 8000 |
| **Example 5** | Splits | 538 | 730 | 1.0 | 2.0 | 6200 |
| **Example 6*** | Splits | 165 | 585 | 0.4 | 1.8 | 8400 |
| **Example 7*** | Splits | 165 | 512 | 0.4 | 1.8 | 9200 |
| **Example 8*** | Splits | 165 | 633 | 0.4 | 2.1 | 7700 |
| **Example 9*** | Splits | 165 | 779 | 0.4 | 2.3 | 6100 |

| | | | | | | |
|---|---|---|---|---|---|---|
| * Comparative | | | | | | |

### Determination of Unsubstituted Sugar Ratio

Unsubstituted mannose and galactose were determined using a Dionex DX 500 ion chromatograph equipped with a CarboPac PA-1 column and an amperometric detector (PAD). The separation of the sugars was performed using a 3 mM NaOH isocratic eluent followed by a column clean up step with NaOH 100 mM .

50 mg of each HPG samples were first hydrolyzed with 7.5 ml of a 2.0 N trifluoroacetic acid solution in a sealed vial at 120 °C for 2.0 hours. The obtained solutions were diluted with high purity water (about 100 times), filtered on a 0.45 µm membrane filter and injected in the ion chromatograph. The mannose and galactose content was evaluated by external calibration with standard solutions of the two sugar. The results are reported in Table 2.

**Table 2**

| | **Man %** | **Gal %** | **Man/Gal** |
|---|---|---|---|
| **Example 1*** | 10.2 | 2.2 | 4.6 |
| **Example 2** | 8.2 | 1.0 | 8.2 |
| **Example 3** | 8.3 | 1.4 | 5.9 |
| **Example 4** | 8.7 | 1.5 | 5.8 |
| **Example 5** | 8.2 | 1.2 | 6.8 |
| **Example 6*** | 8.9 | 2.7 | 3.3 |
| **Example 7*** | 10.3 | 3.2 | 3.2 |
| **Example 8*** | 11.3 | 2.7 | 4.2 |
| **Example 9*** | 5.0 | 1.3 | 3.8 |

| | | | |
|---|---|---|---|
| * Comparative | | | |

### Alkaline-Oxidative Degradation Test

500 g of aqueous solutions at a concentration of 2 % by weight of HPG described in the preceding paragraph were prepared.
Each solution was divided in two parts, the first (300 g) was stored at room temperature; the second one (200 g) was added of 1.0 g of 50 % NaOH and, after stirring at 1000 rpm for 5 minutes, stored in oven at 60 °C. The viscosity of both the solutions was determined after 16 hours with a RVT Brookfield viscometer at 20 °C, 20 rpm.
The viscosities of the solutions stored at room temperature (Vᵣ) and of the degraded solutions (Vₜ), and the % viscosity loss (VL %) are reported in Table 3.

**Table 3**

| | **Vᵣ (mPa*s)** | **Vₜ (mPa_{*}s)** | **VL %** |
|---|---|---|---|
| **Example 1*** | 7600 | 5320 | 30 |
| **Example 3** | 6800 | 5650 | 17 |
| **Example 4** | 8000 | 6100 | 24 |
| **Example 6*** | 8400 | 5800 | 31 |
| **Example 7*** | 9200 | 6350 | 31 |

| | | | |
|---|---|---|---|
| *Comparative | | | |

### Enzymatic Degradation Test

2% by weight water solutions of HPG were prepared by dissolving the HPG powder in a 0.2 M disodium phosphate/0,2 M monosodium phosphate buffer at pH 7.0. 100 g of each solution was treated with 3µL of a NS 44076 alkaline galactomannanase (commercialized by Novozymes) diluted 1:10 with the same phosphate buffer. The % viscosity loss (VL %) over the time was determined using a RVT Brookfield viscometer at 20 °C, 20 rpm.
The results are reported in Table 4.

**Table 4**

| | **VL % 0.5 h** | **VL% 2h** | **VL % 3h** | **VL% 4h** | **VL % 6h** | **VL % 24 h** | **VL % 78 h** |
|---|---|---|---|---|---|---|---|
| **Example 1*** | 30 | 33 | | 34 | 37 | | 49 |
| **Example 2** | 12 | 14 | 15 | | 19 | 23 | |
| **Example 3** | 15 | 18 | | 19 | 21 | | 30 |
| **Example 4** | 16 | 19 | 20 | 22 | 23 | | 32 |
| **Example 6*** | 37 | 40 | | 41 | 42 | | 51 |
| **Example 7*** | 32 | 39 | 40 | | 41 | 46 | |

| | | | | | | | |
|---|---|---|---|---|---|---|---|
| * Comparative | | | | | | | |

### Applicative Test

In order to evaluate the performances of the HPG of the invention the water retention property and the consistency of cementitious compositions comprising the HPG of Examples 1-9 were determined. Water Retention was determined according to the standard test method ASTM C1506-09.

Consistency was determined according to standard test method ASTM C230.

A cementitious composition was prepared by mixing the following ingredients:
1. Cement 8-15%
2. Dolomite 1-1200 µm 82 - 91 %
3. Calcium Hydroxide 1-3%

The Applicative Test were performed on 2 kg of cementitious composition mixed with 380 g water and 2.5 g HPG.

The results of the Applicative Test are reported in Table 5.

**Table 5**

| | **Water retention (%)** | **Consistency (mm)** |
|---|---|---|
| **Example 1*** | 88.0 | 168.0 |
| **Example 2** | 88.0 | 168.0 |
| **Example 3** | 84.0 | 165.0 |
| **Example 4** | 85.0 | 165.5 |
| **Example 5** | 84.0 | 166.0 |
| **Example 6*** | 85.0 | 162.0 |
| **Example 7*** | 88.0 | 165.0 |
| **Example 8*** | 83.0 | 159.0 |
| **Example 9*** | 80.0 | 173.0 |

| | | |
|---|---|---|
| * Comparative | | |

## Claims

1. Process for producing hydroxypropyl guar with molar substitution comprised between 1.5 and 2.3 and **characterized by** having an unsubstituted mannose/galactose ratio higher than 5, comprising, in sequence: a) a derivatization step of guar with propylene oxide in the presence of an alkaline catalyst and in the presence of from 90 to 200 parts of water per 100 parts by weight of guar; b) a step in which part of the water is distilled off until the residual amount of water is from 40 to 60 part per 100 parts by weight of guar; c) an acidification or neutralization step of the reaction mass.

2. The process according to claim 1 wherein the guar is in the form of splits.

3. The process according to claim 1 wherein the guar is in the form of flour.

4. The process according to claim 1 wherein between 100 to 140 parts of water are used per 100 parts of guar.

5. The process according to claim 1 wherein said alkaline catalyst is NaOH.

6. The process according to claim 1 further comprising a purification step.

7. Hydroxypropyl guar (HPG) having molar substitution between 1.5 and 2.3 **characterized in that** it has an unsubstituted mannose/galactose ratio higher than 5.

8. The hydroxypropyl guar according to claim 7 which exhibits a Brookfield ® viscosity not higher than 20.000 mPa_{*}s at 20 °C, 20 rpm at 2% by weight in water.

9. Building compositions containing a hydraulic binder and a hydroxypropyl guar according to claim 7.

10. Paints or varnishes comprising a hydroxypropyl guar according to claim 7.

## Patentansprüche

1. Verfahren für die Herstellung von Hydroxypropyl-Guar mit einer molaren Substitution zwischen 1,5 und 2,3 und durch Aufweisen eines unsubstituierten Mannose/Galaktose-Verhältnisses größer als 5 gekennzeichnet, umfassend, in Reihenfolge: a) einen Derivatisierungsschritt von Guar mit Propylenoxid in Gegenwart eines alkalischen Katalysators und in Gegenwart von 90 bis 200 Teilen Wasser je 100 Gewichtsteilen Guar; b) einen Schritt, in dem ein Teil des Wassers abdestilliert wird, bis die Restwassermenge zwischen 40 und 60 Teilen je 100 Gewichtsteilen Guar beträgt; c) einen Ansäuerungs- oder Neutralisationsschritt der Reaktionsmasse.

2. Verfahren nach Anspruch 1, wobei das Guar in Form von Aufspaltungen vorliegt.

3. Verfahren nach Anspruch 1, wobei das Guar in Form von Mehl vorliegt.

4. Verfahren nach Anspruch 1, wobei zwischen 100 bis 140 Teile Wasser pro 100 Teile Guar verwendet werden.

5. Verfahren nach Anspruch 1, wobei der alkalische Katalysator NaOH ist.

6. Verfahren nach Anspruch 1, ferner umfassend einen Reinigungsschritt.

7. Hydroxypropyl-Guar (HPG), das eine molare Substitution zwischen 1,5 und 2,3 aufweist, **dadurch gekennzeichnet, dass** es ein unsubstituiertes Mannose/Galaktose-Verhältnis größer als 5 aufweist.

8. Hydroxypropyl-Guar nach Anspruch 7, das eine Brookfield®-Viskosität von nicht mehr als 20.000 mPa•s bei 20°C, 20 U/min bei 2 Gewichtsprozent in Wasser aufweist.

9. Bauzusammensetzungen, die ein hydraulisches Bindemittel und ein Hydroxypropyl-Guar gemäß Anspruch 7 enthalten.

10. Farben oder Lacke, die ein Hydroxypropyl-Guar gemäß Anspruch 7 enthalten.

## Revendications

1. Procédé pour produire du guar d'hydroxypropyle avec une substitution molaire comprise entre 1,5 et 2,3 et **caractérisé par** le fait d'avoir un taux non substitué de mannose/galactose supérieur à 5, comprenant, en séquence : a) une étape de dérivatisation du guar avec de l'oxyde de propylène en présence d'un catalyseur alcalin et en présence de 90 à 200 parts d'eau pour 100 parts par poids de guar ; b) une étape dans laquelle une partie de l'eau est séparée par distillation jusqu'à ce que la quantité résiduelle d'eau soit de 40 à 60 parts pour 100 parts par poids de guar ; c) une étape d'acidification ou de neutralisation de la masse de réaction.

2. Procédé selon la revendication 1, dans lequel le guar est sous forme de fractionnement.

3. Procédé selon la revendication 1, dans lequel le guar est sous forme de farine.

4. Procédé selon la revendication 1, dans lequel entre 100 à 140 parts d'eau sont utilisées pour 100 parts de guar.

5. Procédé selon la revendication 1, dans lequel ledit catalyseur alcalin est NaOH.

6. Procédé selon la revendication 1 comprenant entre outre une étape de purification.

7. Guar d'hydroxypropyle (HPG) ayant une substitution molaire entre 1,5 et 2,3 **caractérisé en ce qu'**il comporte un taux non substitué de mannose/galactose supérieur à 5

8. Guar d'hydroxypropyle selon la revendication 7 présentant une viscosité Brookfield® n'excédant pas 20 000 mPa.S à 20°C, 20 tr/m à 2% par poids d'eau.

9. Compositions de construction contenant un liant hydraulique et un guar d'hydroxypropyle selon la revendication 7.

10. Peintures ou vernis comprenant un guar d'hydroxypropyle selon la revendication 7.
